# EUROPÄISCHE PATENTANMELDUNG

(11) **EP 1 855 026 A2**
(43) Veröffentlichungstag der Anmeldung: **14.11.2007**
(21) Anmeldenummer: 07007989.2
(22) Anmeldetag: 19.04.2007
(51) Int. Cl.: F16G 13/18, F16G 13/02

(54) **Laschenkette**

(30) Priorität: 11.05.2006 DE 102006021879
(71) Anmelder: LuK Lamellen und Kupplungsbau Beteiligungs KG, 77815 Bühl (DE)
(72) Erfinder: Vietoris, Aurel, 77815 Bühl (DE)

(57) **Zusammenfassung**

Die Erfindung betrifft eine Laschenkette aus einer Mehrzahl von Laschen (2), die jeweils Kettenglieder bilden, die mit einem Gelenk jeweils mit einem benachbarten Kettenglied verbunden sind.

Die erfindungsgemäße Laschenkette umfasst Dämpfungslaschen (6), die jeweils zwei benachbarte Kettenglieder bezüglich einer Knickbewegung elastisch miteinander verbinden.

## Beschreibung

Die vorliegende Erfindung betrifft eine Laschenkette aus einer Mehrzahl von Laschen, die jeweils Kettenglieder bilden, die mit einem Gelenk jeweils mit einem benachbarten Kettenglied verbunden sind.

Eine gattungsgemäße Laschenkette ist beispielsweise in der DE 100 22 844 offenbart. Bei derartigen Laschenketten tritt das Problem auf, dass bei einer Umschlingung von Kegelscheiben, Zahnrädern, Reibrädern oder dergleichen Trumschwingungen auftreten können. Kettentrumschwingungen entstehen durch Krafteinleitung auf die Kettenglieder beim Ein- oder Auslaufen der Kette beispielsweise in das Kettenrad eines Zahnkettentriebs bzw. dem Scheibensatz eines CVT (Continuously Variable Transmission) -Getriebes. Das Auftreffen der Zahnflanken im Zusammenhang mit dem Polygoneffekt der Gliederkette regt das Kettentrum zu Schwingungen an. Ähnliches passiert bei den CVT-Ketten zwischen dem Wiegedruckstückstirnflächen und den Scheibensätzen. Das Problem tritt also sowohl bei Laschenketten als auch Zahnlaschenketten oder auch Treibriemen oder dergleichen auf. Fallen bei derartigen Umschlingungstrieben die Anregungsfrequenzen mit den Eigenfrequenzen der Trumschwingungen zusammen, so entstehen durch Resonanz relativ hohe Schwingungsamplituden.

Im Stand der Technik wird vielfach versucht, diese Trumschwingungen zum Beispiel durch Gleitschienen oder dergleichen zu behindern. In der DE 100 22 844 wird demgegenüber vorgeschlagen, einzelne Kettenglieder an ihrer den Verbindungsbolzen bzw. Wiegedruckstücken zugewandten Seite mit einer Kunststoffbeschichtung zu versehen, die eine Dämpfung der Schwingungen durch eine Relativbewegung zu den Wiegestücken bewirken soll.

Nachteilig an der Lösung nach der Stand der Technik ist der relativ komplizierte Aufbau der beschichteten Kettenglieder sowie die Gefahr von Abrieb an den jeweiligen Kontaktstellen.

Aufgabe der vorliegenden Erfindung ist es daher, eine Laschenkette anzugeben, die bei einfacher Bauweise eine sichere Dämpfung von Trumschwingungen bewirkt.

Dieses Problem wird gelöst durch eine Laschenkette aus einer Mehrzahl von Laschen, die jeweils Kettenglieder bilden, die mit einem Gelenk jeweils mit einem benachbarten Kettenglied verbunden sind, wobei die Laschenkette Dämpfungslaschen umfasst, die jeweils zwei benachbarte Kettenglieder bezüglich einer Knickbewegung elastisch miteinander verbinden. Unter Laschenkette wird hier selbstverständlich auch eine Zahnlaschenkette verstanden. Die Knickbewegung ist eine Drehung zweier benachbarter Kettenglieder um das beide verbindende Gelenk, beispielsweise bei der Umschlingung eines Zahnrades, Reibrades, Kegelscheibe oder dergleichen wie dies z.B. in der DE 100 22 844 in Fig. 1 dargestellt ist. Eine derartige Knickung oder Knickbewegung ist in Richtung der Umschlingung und insbesondere bei beiden Trums auch in Gegenrichtung im Betrieb möglich.

Vorzugsweise ist vorgesehen, dass die Dämpfungslaschen ein Knicken der Laschenkette in mindestens eine Richtung dämpfen. Es wird also nur eine der möglichen beiden Knickrichtungen gedämpft. Vorzugsweise wird die Dämpfung durch eine elastische Verformung der Dämpfungslaschen bewirkt. Dabei können auch nur Teilbereiche der Laschen verformt werden. Vorzugsweise ist vorgesehen, dass sich die Dämpfungslaschen über jeweils zwei benachbarte Kettenglieder erstrecken. Die Dämpfungslaschen haben dabei eine doppelt so lange Teilung wie die Laschen. In der Laschenkette ist mindestens eine Reihe von Dämpfungslaschen angeordnet. Bevorzugt ist vorgesehen, dass zwei Reihen von Dämpfungslaschen in der Laschenkette angeordnet sind. Die beiden Reihen sind dabei bevorzugt versetzt zueinander angeordnet. Die jeweils zwei Laschen überdeckenden Dämpfungslaschen sind also nicht von der Seite der Laschenkette betrachtet deckungsgleich, sondern jeweils überlappend angeordnet. Vorzugsweise ist vorgesehen, dass die beiden Reihen Endlaschen der Laschenkette bilden. Endlaschen sind die an beiden Seiten der Laschenkette außen angeordneten Laschen. Vorzugsweise ist vorgesehen, dass die Dämpfungslaschen der einen Reihe die Knickbewegung der Kette in die eine Knickrichtung und die Dämpfungslaschen der anderen Reihe die Knickbewegung in die andere Richtung dämpfen. Die beiden Reihen weisen dazu unterschiedliche Dämpfungslaschen auf. Alternativ kann vorgesehen sein, dass die beiden Reihen gleiche Dämpfungslaschen aufweisen. Die Dämpfungslaschen sind dann vorzugsweise unterschiedlich orientiert. Vorzugsweise ist vorgesehen, dass die Dämpfungslaschen zwei Augen umfassen, die mit einem Rücken miteinander verbunden sind. Die Augen umgreifen vorzugsweise die beiden in Laufrichtung äußeren Bolzen zweier benachbarter Kettenglieder. Dadurch wird eine in Kettenlaufrichtung möglichst große Baulänge der Dämpfungslaschen erreicht. Der Rücken kann zwei bogenförmige Rückenteile umfassen. Dies ist insbesondere vorteilhaft, wenn sich der Rücken bei Umschlingung eines Kegelrades, Reibrades, Zahnrades oder dergleichen auf der Innenseite der Bolzen bzw. Wiegestücke befindet. Vorzugsweise ist vorgesehen, dass der Rücken an der in Einbaulage der Laschenkette einer Drehachse eines umschlungenen Ketten- oder Reibrades zugewandten Seite angeordnet sind. Der Rücken ist bei einer Zahnlaschenkette bevorzugt an der Seite der Bolzen angeordnet ist, die den Zähnen zugewandt ist.

In einer weiteren erfinderischen Ausgestaltung ist vorgesehen, dass die Dämpfungslaschen einen Laschenstrang bilden. Der Laschenstrang ist bevorzugt einstückig und kann z.B. als Endlosband hergestellt sein. Vorzugsweise ist der Laschenstrang symmetrisch bezüglich einer in Kettenlaufrichtung verlaufenden Symmetrieachse. Der Laschenstrang weist vorzugsweise eine Verschlussstelle auf. Bevorzugt ist vorgesehen, dass die Laschenkette zwei Laschenstränge umfasst und die Verschlussstellen beider Laschenstränge in Kettenlaufrichtung versetzt zueinander angeordnet sind. Das Eingangs genannte Problem wird auch gelöst durch eine Dämpfungslasche zur Verwendung in einer erfindungsgemäßen Laschenkette.

Im Folgenden werden Ausführungsbeispiele der Erfindung anhand der beiliegenden Zeichnungen erläutert. Dabei zeigen:
- Fig. 1: eine Seitenansicht einer Zahnlaschenkette nach Stand der Technik im Zweilaschen verband;
- Fig. 2: eine Ansicht der Zahnlaschenkette gemäß Fig. 1 in der Draufsicht;
- Fig. 3: ein erstes Ausführungsbeispiel einer erfindungsgemäßen Zahnlaschenkette in einer ersten Seitenansicht;
- Fig. 4: das Ausführungsbeispiel gemäß Fig. 3 in der Draufsicht;
- Fig. 5: das Ausführungsbeispiel gemäß Fig. 3 in einer weiteren Seitenansicht;
- Fig. 6: ein zweites Ausführungsbeispiel einer erfindungsgemäßen Zahnlaschenkette in der Seitenansicht;
- Fig. 7: das Ausführungsbeispiel gemäß Fig. 6 in der Draufsicht;
- Fig. 8: eine weitere Seitenansicht des Ausführungsbeispiels gemäß Fig. 6;
- Fig. 9: ein drittes Ausführungsbeispiel einer erfindungsgemäßen Zahnlaschenkette;
- Fig. 10: das Ausführungsbeispiel gemäß Fig. 9 in der Draufsicht;
- Fig. 11: eine weitere Seitenansicht des Ausführungsbeispiels gemäß Fig. 9;
- Fig. 12: ein viertes Ausführungsbeispiel einer erfindungsgemäßen Zahnlaschenkette;
- Fig. 13: das Ausführungsbeispiel gemäß Fig. 12 in der Draufsicht;
- Fig. 14: eine weitere Seitenansicht des Ausführungsbeispiels gemäß Fig. 12.

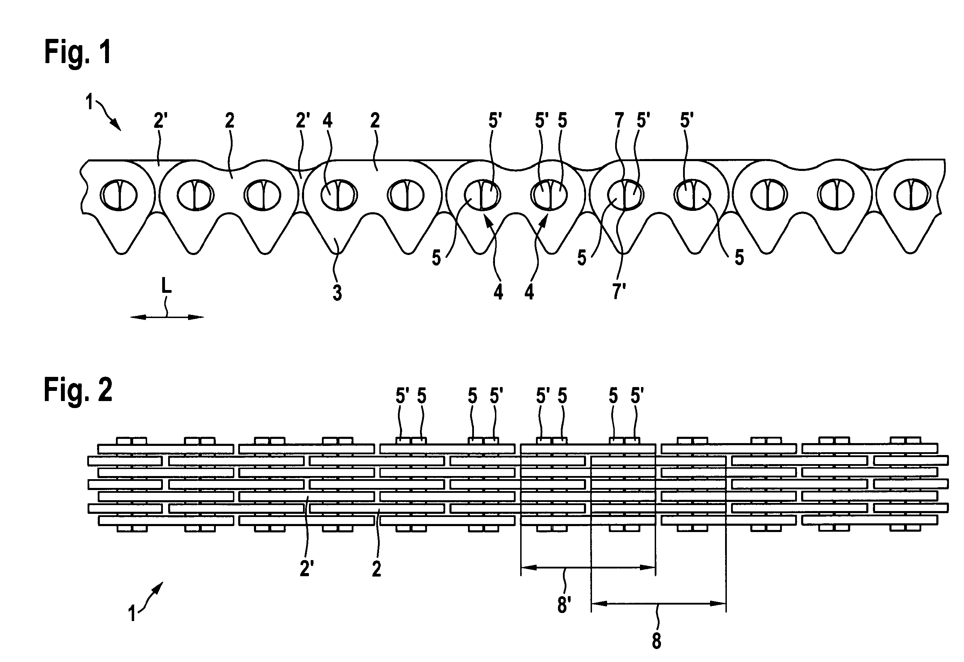

Fig. 1 zeigt eine Seitenansicht und Fig. 2 eine Draufsicht einer Zahnlaschenkette nach Stand der Technik im Zweilaschenverband. Anhand der Figuren 1 und 2 wird der grundsätzliche Aufbau von Laschenketten und Zahnlaschenketten sowie die in den erfindungsgemäßen Ausführungsbeispielen verwendeten Begriffe erläutert. Die Ausführungsbeispiele werden am Beispiel einer Laschenkette mit Zweilaschenverband beschrieben, sind aber ebenso bei einer Laschenkette mit Dreilaschenverband anwendbar. Die Laschenkette 1 umfasst eine Vielzahl von Laschen 2 und 2'. Die Laschen 2 und 2' sind jeweils abwechselnd überlappend angeordnet und mit Gelenkbolzen 4 als Gelenk verbunden. Beide Enden einer Lasche 2 sind folglich mittels eines Gelenkes mit einer oder zwei Laschen 2' verbunden. Die Gelenkbolzen 4 können einteilig sein, sind aber bevorzugt zweiteilig, wobei ein Wiegestück 5 jeweils einer Lasche zugeordnet ist und auf einem einer benachbarten Lasche 2' zugeordneten Wiegestück 5' abrollt. Die Wiegestücke 5, 5' weisen dazu jeweils ein Wälzprofil 7 bzw. 7' auf, mit dem diese aufeinander abrollen bzw. gleiten können. Die Wälzprofile 7, 7' können identisch oder unterschiedlich sein. Quer zur Laufrichtung L, diese ist mit einem Pfeil mit dem Bezugszeichen L gekennzeichnet, sind die Laschen 2 und 2' gestapelt, so dass zwischen zwei quer zur Laufrichtung L nebeneinander angeordneten Gelenkbolzen 4 eine überlappend angeordnete Lasche 2, 2' angeordnet ist. Dies gilt selbstverständlich nicht für die jeweils quer zur Laufrichtung L außen angeordneten Laschen 2 bzw. 2', diese haben nur auf einer Seite einen Nachbarn. Die so gebildeten Kettenglieder (auch als Laschenstapel bezeichnet) von Laschen 2, 2' bilden jeweils paketweise ein Kettenglied 8 bzw. 8'. Die Laschen 2 und 2' sind im vorliegenden Ausführungsbeispiel identische Bauteile, eine Unterscheidung zwischen Laschen 2 und 2' ist nur durch die Anordnung erkennbar, daher wird nachfolgend nur von Laschen 2 gesprochen. In Fig. 2 sind Kettenglieder von jeweils drei Laschen 2 und fünf Laschen 2' dargestellt, hier können aber auch Kettenglieder mit einer beliebigen anderen Anzahl an Laschen 2 bzw. 2' vorgesehen sein.

Zwischen den Drehpunkten der Gelenkbolzen 4 bzw. der aufeinander abrollenden oder gleitenden Wiegestücke 5 und 5' besteht jeweils ein Abstand T, der als Teilung der Laschenkette bzw. Zahnlaschenkette bezeichnet wird. Der Abstand T bezeichnet dabei bildlich dargestellt die Länge, die ein Geradenstück, welches aus einem der Kettenglieder 8 bzw. 8' gebildet wird, bei einer eingeknickten Kette hat.

Die Laschen 2 sind - wie in Fig. 1 zu erkennen ist - bei einer Zahnlaschenkette jeweils mit Laschenzähnen 3 versehen. Bei einer Laschenkette entfallen die Laschenzähne 3. Mit den Laschenzähnen 3 kann die Laschenkette 1 mit einer Verzahnung, z. B. eines Zahnrades, kämmen. Die Teilung zwischen Laschen 2 und 2' ist dabei so ausgelegt, dass sich insgesamt bei gestreckter Kette eine gleichmäßige Teilung zwischen den Laschenzähnen 3 ergibt. Die Laschen 2 und 2' sind mit Laschenzähnen 3 versehen, so dass sämtliche Laschen und Gegenlaschen jeweils mit Laschenzähnen 3 versehen sind. Ebenso ist es aber möglich, entweder nur Laschen 2 oder Gegenlaschen 2' mit zwei Laschenzähnen 3 zu versehen oder jeweils Laschen und Gegenlaschen mit nur einem Laschenzahn 3 zu versehen. Die Kettenglieder sind zu beiden Seiten von Dämpfungslaschen 6 abgeschlossen. Die Zahnlaschenkette gemäß Fig. 1 und Fig. 2 ist der Übersichtlichkeit halber ohne Dämpfungslaschen dargestellt.

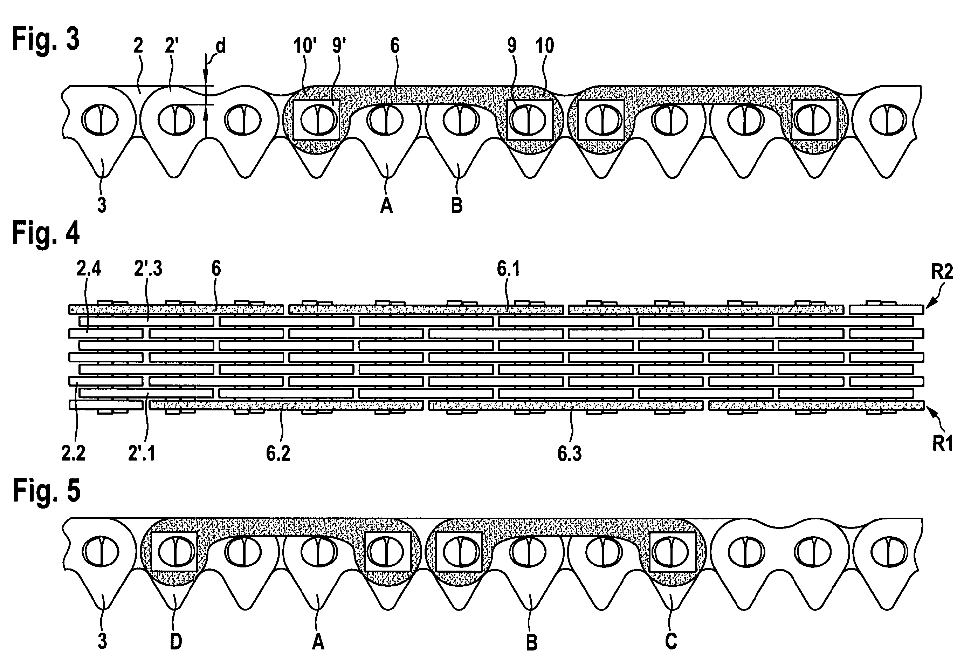

In Fig. 3 bis 5 ist ein Ausführungsbeispiel einer erfindungsgemäßen Zahnlaschenkette dargestellt. Diese umfasst Kettenglieder 8 und 8' entsprechend der Darstellung der Fig. 1 und 2. Zusätzlich sind die Kettenglieder 8 bzw. 8' mit Dämpfungslaschen 6 versehen. Die Dämpfungslaschen 6 schließen die Kettenglieder 8 bzw. 8' jeweils zur Seite hin ab. Die Dämpfungslaschen 6 haben jeweils die doppelte Teilung der Kettenglieder 8 bzw. 8'. Zum leichteren Verständnis wurden in den nachfolgenden Figuren zwei Kettenglieder 8', die mit einer Dämpfungslasche 6 verbunden sind, herausgegriffen und mit den Buchstaben A und B bezeichnet.

Die Dämpfungslaschen 6 verbinden jeweils zwei benachbarte Kettenglieder 8,8" dergestalt miteinander, dass die jeweils äußeren Gelenkbolzen 4 bzw. Wiegestücke 5, 5' von einer Bohrung 9 bzw. 9' der Dämpfungslasche 6 umgriffen werden. Die Dämpfungslaschen bilden, wie in Fig. 4 zu erkennen ist, zwei Reihen von in Laufrichtung L hintereinander angeordneten Laschen, diese sind mit R1 und R2 bezeichnet. Unter Reihen von Laschen werden hier die in Kettenlaufrichtung jeweils nebeneinander angeordneten Laschen verstanden. Die Dämpfungslaschen 6 weisen dazu an ihren beiden Enden jeweils ein Auge 10 bzw. 10', welches die Bohrungen 9 bzw. 9' aufnimmt. Die beiden Augen 10, 10' sind mit einem Rücken 11 miteinander verbunden, der eine Dicke D aufweist, die in etwa dem Abstand d zwischen einer Kettenoberkante 12 und der der Kettenoberkante 12 zugewandten Oberfläche der Bolzen 4 bzw.

Wiegestücke 5, 5' entspricht. Auf diese Weise ragen die Dämpfungslaschen nicht über die Kettenoberkante 12 hinaus. Alternativ kann aber auch vorgesehen sein, dass die Dicke D der Rücken 11 größer ist als der Abstand d, so dass die Dämpfungslaschen 6 über die Kettenoberkante hinausragen. Die Dämpfungslaschen 6 sind zumindest zwischen den Augen 10, 10' aus einem elastisch biegsamen Material, so dass bei einem Einknicken der Kette 1 auch ein Einknicken des Kettengliedes A gegenüber dem Kettenglied B möglich ist

Um eine elastische Verformung der Dämpfungslaschen 6 zu ermöglichen können diese beispielsweise vollständig aus einem elastischen Material, beispielsweise aus Gummi oder einem Verbundmaterial, beispielsweise einem mit Stahl armierten Gummi, bestehen. Alternativ können die Dämpfungslaschen 6 aber auch bereichsweise aus unterschiedlichen Materialien bestehen, die Augen 10, 10' werden beispielsweise bei einer Biegung der Kette nicht deformiert und können aus einem weniger elastischen Material, z. B. aus Stahl bestehen, der Rücken 11 wird bei einer Biegung der Kette 1 deformiert und kann beispielsweise aus Gummi oder einem Gummi-Stahl-Verbundmaterial bestehen. Ebenso ist es aber auch möglich, geeignete Vollkunststoffe oder Kunststoffverbundmaterialien für die Dämpfungslaschen 6 zu verwenden. In Fig. 4 ist die in der Seitenansicht dargestellte Kette 1 gemäß Fig. 3 in der Draufsicht dargestellt. Wie zu erkennen ist werden an beiden Seiten die Dämpfungslaschen 6 jeweils wechselweise so angeordnet, dass diese sich jeweils paarweise überlappen. Eine Dämpfungslasche 6.1 auf der einen Seite der Kette 1 wird beispielsweise jeweils zur Hälfte von Dämpfungslaschen 6.2 und 6.3 auf der anderen Seite der Kette 1 in Laufrichtung L der Kette 1 überdeckt. Während also auf der in Fig. 3 dargestellten Kettenseite beispielsweise die Kettenglieder A und B mit der Dämpfungslasche 6 verbunden sind, ist auf der anderen Seite das Kettenglied B mit dem benachbarten Kettenglied C verbunden und das Kettenglied A mit dem benachbarten Kettenglied D verbunden. Nebeneinander liegende Kettenglieder 8, 8' werden also jeweils auf beiden Seiten abwechselnd miteinander verbunden. Auf diese Weise ist die durch die Dämpfungslaschen 6 zusätzlich bewirkte Steifigkeit der Kette 1 gegenüber einer Biegung der Kettenglieder 8, 8' gegeneinander über die Kettelänge gleich. Bei den Ausführungsbeispielen gemäß der Fig. 3 bis 5 werden also die Dämpfungslaschen 6 versetzt zueinander verbaut, um eine gleichmäßige Überdeckung aller Wiegegelenke, die durch die Wiegestücke 5, 5' jeweils paarweise gebildet werden, zu realisieren. Diese versetzte Verbauung der Dämpfungslaschen 6 kann, wie im Ausführungsbeispiel der Fig. 3 bis 5 gezeigt, an den Seiten der Kette erfolgen oder an beliebigen Stellen innerhalb der Kette. Beispielsweise könnten die Dämpfungslaschen 6 zwischen den mit 2'.1 und 2.2 bzw. 2'.3 und 2.4 bezeichneten Reihen von Laschen 2 bzw. 2' und damit innerhalb der Kette 1 angeordnet werden.

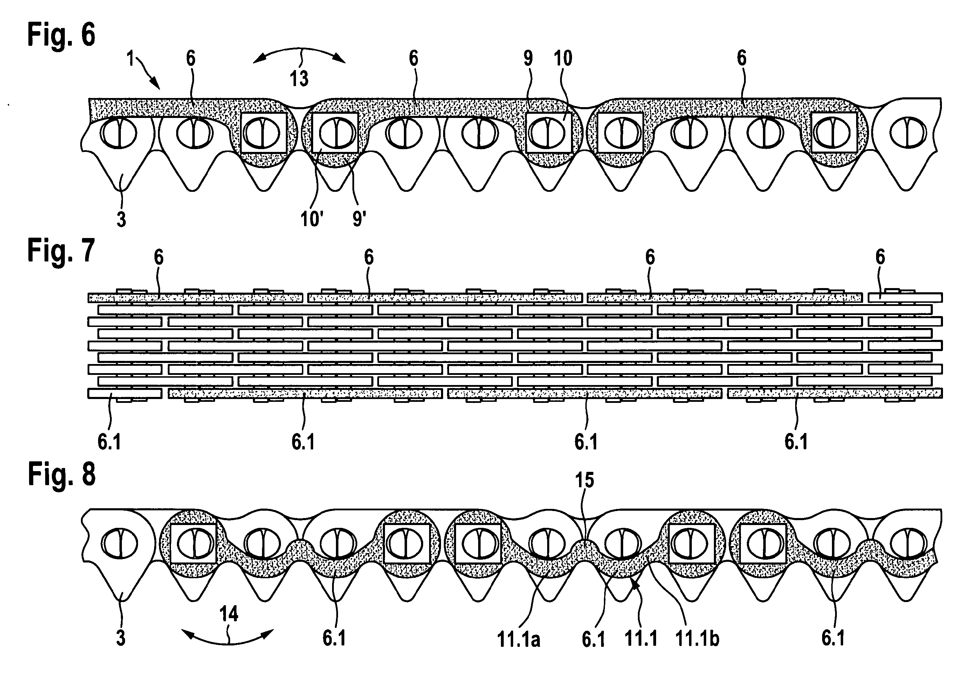

Fig. 6 bis 8 zeigen ein alternatives Ausführungsbeispiel einer erfindungsgemäßen Laschenkette. Auch hier sind zur leichteren Darstellung und zum leichteren Verständnis die Dämpfungslaschen 6 jeweils an den beiden Seiten der Kette 1 angeordnet. Auf der in Fig. 6 dargestellten einen Seite der Kette 1 sind Dämpfungslaschen gemäß Fig. 3 angeordnet. Auf der in Fig. 8 anderen Seiten der Kette sind Dämpfungslaschen 6.1 angeordneten, die eine Knickbehinderung der Kette 1 in die jeweils andere Auslenkungsrichtung bewirken. Während die Dämpfungslaschen 6 auf der einen Seite im Wesentlichen die Knickrichtung gemäß des Doppelpfeiles 13 behindern, dies ist die im Betrieb bei Umschlingung eines Kegelrades oder dergleichen auftretende Knickrichtung, behindern die Dämpfungslaschen 6.1 im Wesentlichen die entgegengesetzte Knickrichtung gemäß dem Doppelpfeil 14 in Fig. 8. Mit im Wesentlichen ist hier gemeint, dass durch die Steifigkeit des Materials und eine gegebenenfalls notwendige Stauchung der Dämpfungslaschen 6 bzw. 6.1 auch eine Knickung in die jeweilige Gegenrichtung, also bei den Dämpfungslaschen 6 auch eine Knickrichtung in Richtung des Doppelpfeiles 14 und bei den Dämpfungslaschen gemäß 6.1 auch eine Knickrichtung gemäß dem Doppelpfeil 13, behindert wird.

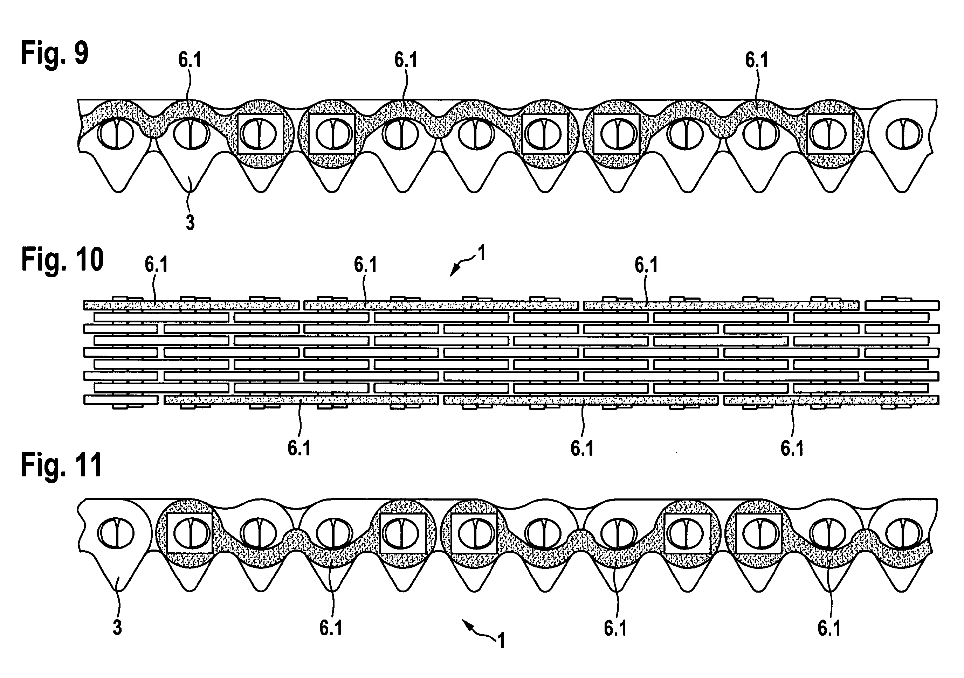

Die Dämpfungslaschen 6.1 gemäß Fig. 8 weisen eine Kontur auf, die einen Zahneingriff in die Zähne 3 der Laschenkette 1 nicht behindern. Die Dämpfungslaschen 6.1 umfassen dazu einen Rücken 11.1, der die Augen 10, 10' miteinander verbindet, der auf der den Zähnen 3 zugewandten Seite der Gelenkbolzen 4 bzw. Wiegestücke 5, 5' angeordnet ist. Der Rücken 11.1 ist wiederum unterteilt in zwei Rückenteile 11.1 a und 11.1 b, die jeweils bogenförmig ausgeführt sind und in einem Kontaktpunkt 15 miteinander verbunden sind. Durch die bogenförmige Ausführung der Rückenteile wird gewährleistet, dass diese die Freiräume zwischen den Zähnen 3 nicht überdecken. Durch die an den beiden Seiten der Laschenkette 1 angeordneten unterschiedlichen Typen von Dämpfungslaschen bzw. 6.1 wird eine Knickbehinderung und damit eine Schwingungsdämpfung in beide Knickrichtungen der Laschenkette 1 bewirkt. Auch hier können die Dämpfungslaschen 6, 6.1 statt an den beiden Enden der Laschenkette 1 zwischen den Kettengliedern verbaut werden. Die jeweils an den Seiten der Laschenkette 1 angeordneten freien Dämpfungslaschen 6 bzw. 6.1 sind ähnlich wie bei dem Ausführungsbeispiel gemäß der Fig. 3 bis 5 überlappend angeordnet. Fig. 9 bis 11 zeigen ein weiteres Ausführungsbeispiel einer erfindungsgemäßen Laschenkette 1. Hier werden die gemäß dem Ausführungsbeispiel der Fig. 6 bis 8 nur auf einer Seite, wie in Fig. 8 dargestellt, angeordneten Dämpfungslaschen 6.1 auf beiden Seiten verwendet und dabei jeweils so eingebaut, dass diese unterschiedliche Knickrichtungen der Laschenkette 1 behindern. Die in Fig. 11 dargestellten Dämpfungslaschen 6.1 sind dabei identisch wie in der Darstellung der Fig. 8 verbaut. Auf der anderen Seite, dies ist in Fig. 9 dargestellt, sind die Dämpfungslaschen 6.1 um 180° gedreht verbaut, so dass diese die gleiche Wirkung wie die in Fig. 6 dargestellten Dämpfungslaschen 6, nämlich eine Knickbehinderung hauptsächlich in Knickrichtung 13, haben.

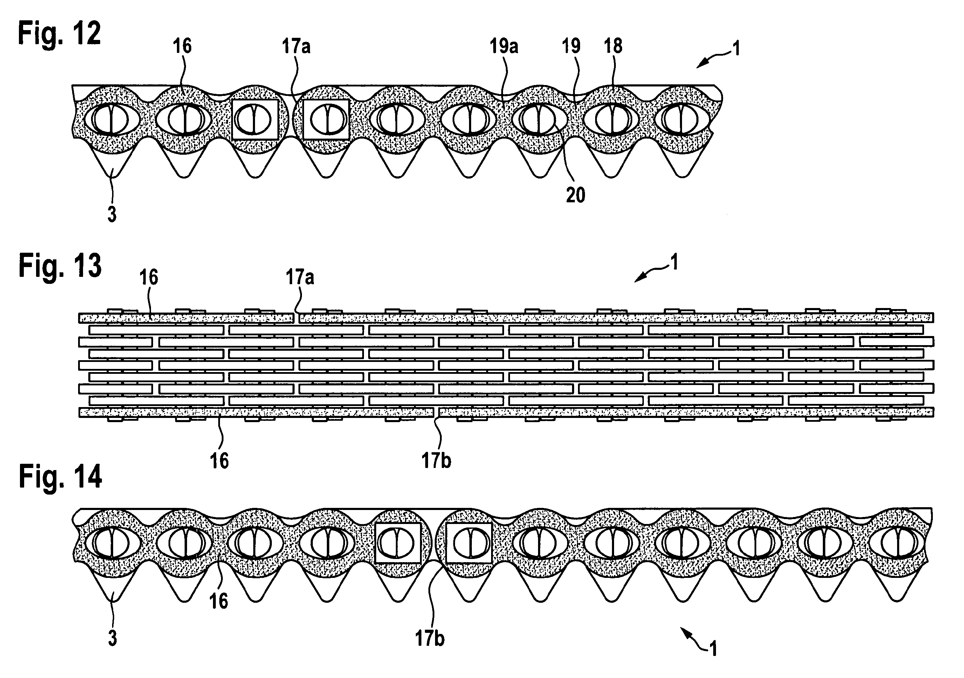

In den Fig. 12 bis 14 ist ein weiteres Ausführungsbeispiel einer erfindungsgemäßen Laschenkette dargestellt. Die Dämpfungslaschen 6 bzw. 6.1 sind hier nicht als diskrete Laschen ausgebildet, stattdessen wird ein Laschenstrang 16 verwendet. Der Laschenstrang 16 ist durchgehend über die Kettenlänge angeordnet und umfasst eine Verschlußstelle 17, an der die beiden Enden des Laschenstranges 16 zwar aufeinander treffen, aber nicht miteinander verbunden sind. Alternativ kann hier auch vorgesehen sein, dass an der Verschlußstelle 17 der Laschenstrang 16 mit seinen beiden Enden verbunden wird, beispielsweise durch Vulkanisieren, Verkleben oder dergleichen. Der Laschenstrang 16 umfasst jeweils im Wesentlichen ovale Laschenelemente 18 mit einer hier auch ovalen Bohrung 20, wobei die Bohrung 20 jeweils die Gelenkbolzen 4 bzw. Wiegestücke 5, 5' umgreift. Die Laschenelemente 18 sind jeweils an Verbindungsstellen 19, 19 a miteinander verbunden. Der Laschenstrang 16 kann dabei beispielsweise aus Foliematerial bestehen, wobei zwei Folien aufeinander gelegt werden und an den Verbindungsstellen 19, 19 a jeweils miteinander verbunden werden. Auf diese Art und Weise hat der Laschenstrang 16 über seine gesamte Länge im Wesentlichen die gleiche Gesamtdicke. Die Verschlußstellen 17 a und 17 b der beiden Laschenstränge 16 sind jeweils versetzt zueinander angeordnet, wie aus den Fig. 12 bis 14 zu erkennen ist.

Auch bei dem Ausführungsbeispiel gemäß der Fig. 12 bis 14 können die Laschenstränge 16 sowohl an den beiden Seiten der Laschenkette 1 als auch zwischen den einzelnen Kettengliedern angeordnet sein. Dabei ist es möglich, statt zweier Laschenstränge nur einen Laschenstrang zu verwenden. Bei dem Ausführungsbeispiel der Fig. 12 bis 14 wird statt einzelner Laschen ein Laschenstrang 16 verwendet. Dieser Strang kann über die gesamte Kettenlänge montiert werden und speziell bei der Anwendung in Verteilergetrieben die Kette bereits in eine Form bringen, z. B. eine ovale oder kreisförmige Form. Dazu weist der Laschenstrang im spannungslosen und nicht verformten Zustand die entsprechende ovale oder kreisförmige Form bereits auf.

Die erfindungsgemäße Laschenkette zeigt durch die Anwendung der dargestellten Laschen bzw. Laschenstränge eine Selbsthemmung gegenüber Trumschwingungen. Die Materialeigenschaften der elastischen Laschen sind so zu wählen, dass sie den Umgebungsbedingungen der jeweiligen Anwendung standhalten. Vorzugsweise sind Gummimaterialien, die sich bei höheren Temperaturen nicht ausdehnen, auszuwählen. Eine Längung der Laschen und damit eine einhergehende Verringerung des gewünschten Effektes der Trumschwingungsreduzierung wird dadurch vermieden. Die genannten Eigenschaften der Trumschwingungsreduzierung wird durch geeignete Materialwahl auch bei kalten Temperaturen gewährleistet, aus diesem Grund kann u. a. auch auf eine Mischverbauung (Materialmix) der Laschen aus unterschiedlichen Werkstoffen, z. B. Gummi, Stahl, Glasfaser und dergleichen, zurückgegriffen werden.

### Bezugszeichenliste

- 1: Laschenkette
- 2,2': Lasche
- 3: Zähne
- 4: Gelenkbolzen
- 5, 5': Wiegestück
- 6,6.1: Dämpfungslasche
- 7, 7': Wälzprofil
- 8, 8': Kettenglied
- 9, 9': Bohrung
- 10, 10': Auge
- 11, 11.1: Rücken
- 11.1a, 11.1b: Rückenteile
- 12: Kettenoberkante
- 13: Knickrichtung
- 14: Knickrichtung
- 15: Kontaktpunkt
- 16: Laschenstrang
- 17a, 17b: Verschlussstelle
- 18: Laschenelement
- 19, 19a: Verbindungsstellen
- 20: Bohrung

## Patentansprüche

1. Laschenkette (1) aus einer Mehrzahl von Laschen (2, 2'), die jeweils Kettenglieder (8, 8') bilden, die mit einem Gelenk (4, 5, 5') jeweils mit einem benachbarten Kettenglied (8, 8') verbunden sind, **dadurch gekennzeichnet, dass** die Laschenkette Dämpfungslaschen (6, 6.1, 16) umfasst, die jeweils zwei benachbarte Kettenglieder (8, 8') bezüglich einer Knickbewegung (13, 14) elastisch miteinander verbinden.

2. Laschenkette nach Anspruch 1, **dadurch gekennzeichnet, dass** die Dämpfungslaschen (6, 6.1, 6.2, 6.3, 16) ein Knicken der Laschenkette in mindestens eine Richtung (13, 14) dämpfen.

3. Laschenkette nach einem der Ansprüche 1 oder 2, **dadurch gekennzeichnet, dass** die Dämpfung durch eine elastische Verformung der Dämpfungslaschen (6, 6.1, 6.2, 6.3, 16) bewirkt wird.

4. Laschenkette nach einem der Ansprüche 1 bis 3, **dadurch gekennzeichnet, dass** sich die Dämpfungslaschen (6, 6.1, 6.2, 6.3, 16) über jeweils zwei benachbarte Kettenglieder (8, 8') erstrecken.

5. Laschenkette nach einem der Ansprüche 1 bis 4, **dadurch gekennzeichnet, dass** in der Laschenkette (8, 8') mindestens eine Reihe (R1, R2) von Dämpfungslaschen (6, 6.1, 6.2, 6.3, 16) angeordnet ist.

6. Laschenkette nach Anspruch 5, **dadurch gekennzeichnet, dass** zwei Reihen (R1, R2) von Dämpfungslaschen (6, 6.1, 6.2, 6.3, 16) in der Laschenkette (1) angeordnet sind.

7. Laschenkette nach Anspruch 6, **dadurch gekennzeichnet, dass** die beiden Reihen (R1, R2) versetzt zueinander angeordnet sind.

8. Laschenkette nach Anspruch 6 oder 7, **dadurch gekennzeichnet, dass** die beiden Reihen (R1, R2) Endlaschen der Laschenkette (1) bilden.

9. Laschenkette nach einem der Ansprüche 6 bis 8, **dadurch gekennzeichnet, dass** die Dämpfungslaschen (6, 6.1, 6.2, 6.3, 16) der einen Reihe (R1, R2) die Knickbewegung der Kette in die eine Knickrichtung (13, 14) und die Dämpfungslaschen (6, 6.1, 6.2, 6.3, 16) der anderen Reihe (R1, R2) die Knickbewegung in die andere Richtung (13, 14) dämpfen.

10. Laschenkette nach einem der Ansprüche 6 bis 9, **dadurch gekennzeichnet, dass** die beiden Reihen (R1, R2) unterschiedliche Dämpfungslaschen (6, 6.1, 6.2, 6.3, 16) aufweisen.

11. Laschenkette nach einem der Ansprüche 6 bis 9, **dadurch gekennzeichnet, dass** die beiden Reihen (R1, R2) gleiche Dämpfungslaschen (6, 6.1, 6.2, 6.3, 16) aufweisen.

12. Laschenkette nach Anspruch 11, **dadurch gekennzeichnet, dass** die Dämpfungslaschen (6, 6.1, 6.2, 6.3, 16) unterschiedlich orientiert sind.

13. Laschenkette nach einem der Ansprüche 6 bis 12, **dadurch gekennzeichnet, dass** die Dämpfungslaschen zwei Augen (10, 10') umfassen, die mit einem Rücken (11) miteinander verbunden sind.

14. Laschenkette nach Anspruch 13, **dadurch gekennzeichnet, dass** die Augen (10, 10') die beiden in Laufrichtung äußeren Bolzen (4, 5, 5') zweier benachbarter Kettenglieder (8, 8') umgreifen.

15. Laschenkette nach Anspruch 13 oder 14, **dadurch gekennzeichnet, dass** der Rücken (11) zwei bogenförmige Rückenteile (11.1 a, 11.1 b) umfasst.

16. Laschenkette nach Anspruch 15, **dadurch gekennzeichnet, dass** der Rücken (11, 11.1,) an der in Einbaulage der Laschenkette (1) einer Drehachse eines umschlungenen Ketten- oder Reibrades zugewandten Seite angeordnet sind.

17. Laschenkette nach Anspruch 16, **dadurch gekennzeichnet, dass** der Rücken (11) bei einer Zahnlaschenkette an der Seite der Bolzen (4, 5, 5') angeordnet ist, die den Zähnen (3) zugewandt ist.

18. Laschenkette nach einem der Ansprüche 1 bis 17, **dadurch gekennzeichnet, dass** die Dämpfungslaschen einen Laschenstrang (16) bilden.

19. Laschenkette nach Anspruch 18, **dadurch gekennzeichnet, dass** der Laschenstrang (16) einstückig ist.

20. Laschenkette nach Anspruch 18 oder 19, **dadurch gekennzeichnet, dass** der Laschenstrang (16) symmetrisch bezüglich einer in Kettenlaufrichtung (L) verlaufenden Symmetrieachse ist.

21. Laschenkette nach Anspruch 19 oder 20, **dadurch gekennzeichnet, dass** der Laschenstrang (16) eine Verschlussstelle (17a, 17b) aufweist.

22. Laschenkette nach Anspruch 21, **dadurch gekennzeichnet, dass** diese zwei Laschenstränge (16) umfasst und die Verschlussstellen (17a, 17b) beider Laschenstränge (16) versetzt zueinander angeordnet sind.

23. Dämpfungslasche zur Verwendung in einer Laschenkette nach einem der Ansprüche 1 bis 22.
